(19) Europäisches Patentamt
European Patent Office
Office européen des brevets

(11) **EP 4 685 765 A1**

(12) **EUROPEAN PATENT APPLICATION**

(43) Date of publication:
**28.01.2026 Bulletin 2026/05**

(21) Application number: **25186043.3**

(22) Date of filing: **27.06.2025**

(51) International Patent Classification (IPC):
**G08B 17/12** (2006.01) **G08B 29/18** (2006.01)

(52) Cooperative Patent Classification (CPC):
**G08B 29/188; G08B 17/12; G08B 17/125**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **22.07.2024 IN 202411055734**

(71) Applicant: **Life Safety Distribution GmbH**
**1180 Rolle (CH)**

(72) Inventors:
• **KOTHARI, Sanjay**
**Charlotte, 28202 (US)**

• **KHURANA, Mohit**
**Charlotte, 28202 (US)**
• **HANAGANDI, Sheetal S**
**Charlotte, 28202 (US)**
• **NARAYANAN R, Ranjith**
**Charlotte, 28202 (US)**
• **GANESH, Bindu Rani**
**Charlotte, 28202 (US)**
• **VARTAK, Sameer Dinkar**
**Charlotte, 28202 (US)**
• **YIM, Eunbin**
**Charlotte, 28202 (US)**

(74) Representative: **Haseltine Lake Kempner LLP**
**Cheapside House**
**138 Cheapside**
**London EC2V 6BJ (GB)**

(54) **FLAME DETECTION SYSTEM**

(57) A flame detection system is disclosed. The flame detection system comprises a image capturing unit configured to capture images of a field of view (FOV), a flame detector configured to capture a first set of spectral band data and a second set of spectral band data, and a processor configured to classify the one or more images and first set of spectral band data, assign a weight to each second set of spectral band data, receive a flame count for each second set of spectral band data, determine a weighted count for each flame count, determine a quantity of weighted counts exceeding its respective threshold value, and determine that a flame exists within the FOV when the quantity is greater than or equal to a quantity threshold value, and determine that a flame does not exist within the FOV when the quantity is less than the quantity threshold value.

FIG. 2

**Description**

**TECHNOLOGICAL FIELD**

Example embodiments of the present disclosure relate generally to a flame detection system, and more particularly, to a flame detection system for false alarm rejection and a method thereof.

**BACKGROUND**

Flame detection plays a crucial role in safeguarding against fire hazards. Flame detection systems are employed for detecting such fire hazards. The flame detection systems encompass various sensing elements such as infrared (IR) sensors, ultraviolet (UV) sensors, photodetectors, etc. These flame detection systems capture radiations emitted from such fire hazards. Existing flame detection systems often fail to detect actual flames due to the presence of a reflection of a known, friendly flame, or the presence of false flame sources, such as arc welding, halogen lights, or heaters in the field of view.

The inventors identified a number of deficiencies and problems in existing flame detection systems, and through applied effort, ingenuity, and innovation, many of these identified problems have been solved by developing solutions that are included in embodiments of the present disclosure, many examples of which are described in detail herein.

**BRIEF SUMMARY**

The following presents a simplified summary to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In an example embodiment, a flame detection system is disclosed. The flame detection system comprises at least one image capturing unit to record images of a field of view (FOV), at least one flame detector configured to capture a first set of spectral band data and a second set of spectral band data present in the FOV, and at least one processor communicatively coupled to the at least one image capturing unit and the at least one flame detector. Further, the at least one processor is configured to classify the one or more images, classify the first set of spectral band data, assign a weight to each of the second set of spectral band data based at least on the classification of the one or more images and the classification of the first set of spectral band data, receive at least one flame count for each of the second set of spectral band data, for each flame count, determine a weighted count based on the weight assigned to the respective second set of spectral band data, for each weighted count, determine whether the weighted count exceeds a respective threshold value, determine a quantity of weighted counts exceeding its respective threshold value, in an instance in which the quantity is greater than or equal to a quantity threshold value, determine that a flame exists within the FOV, and in an instance in which the quantity is less than the quantity threshold value, determine that a flame does not exist within the FOV.

In some embodiments, the at least one image capturing unit corresponds to a camera sensor and the at least one flame detector corresponds to a combination of an infrared (IR) sensor and an ultraviolet (UV) sensor. In some embodiments, the first set of spectral band data corresponds to a near band IR data and the second set of spectral band data corresponds to a long band IR data, a wide band IR data, and an ultraviolet UVC band data. In some embodiments, the long band IR data corresponds to hot $CO_2$ energy spectrum and the wide band IR data corresponds to hot $H_2O$ energy spectrum.

In some embodiments, the one or more images are classified into types of welding processes within the FOV, day/night, indoor/outdoor, heater/lights, reflected sunlight, modulated/unmodulated sunlight, or types of weather. In some embodiments, the first set of spectral band data is classified into indoor/outdoor, modulated/unmodulated sunlight, or day/night.

In some embodiments, the at least one flame count for each of the second set of spectral band data is for a predefined sample per second. Further, the predefined sample per second corresponds to a number of samples received by the at least one processor in time period. In some embodiments, the at least one processor is further configured to compare a count of each of the instances where the flame exists within the FOV or the flame does not exists within the FOV with a conditional probability data to determine whether the flame exists within the FOV or not.

In some embodiments, the conditional probability data depends on the quantity of weighted counts and respective threshold value. In some embodiments, the at least one image capturing unit is positioned in proximity to the at least one flame detector or the at least one image capturing unit and the at least one flame detector are placed within a housing.

In another example embodiment, a method for flame detection is disclosed. The method comprises classifying, via at least one processor, one or more images of a field of view (FOV) captured by at least one image capturing unit;

classifying, via the at least one processor, a first set of spectral band data detected from the FOV; assigning, via the at least one processor, a weight to each of a second set of spectral band data detected from the FOV based at least on the classification of the one or more images and the classification of the first set of spectral band data; receiving, via the at least one processor, at least one flame count for each of the second set of spectral band data; for each flame count, determine a weighted count based on the weight assigned to the respective second set of spectral band data; for each weighted count, determine whether the weighted count exceeds a respective threshold value; determining, via the at least one processor, a quantity of weighted counts exceeding its respective threshold value; in an instance in which the quantity is greater than or equal to a quantity threshold value, determine that a flame exists within the FOV; and in an instance in which the quantity is less than the quantity threshold value, determine that a flame does not exist within the FOV.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below.

## BRIEF DESCRIPTION OF THE DRAWINGS

Having thus described certain example embodiments of the present disclosure in general terms, reference will hereinafter be made to the accompanying drawings, which are not necessarily drawn to scale, and wherein:

FIG. 1 illustrates a block diagram of a flame detection system in accordance with an example embodiment of the present disclosure;
FIG. 2 illustrates a flowchart of the flame detection system in accordance with an example embodiment of the present disclosure;
FIG. 3 illustrates a table having data of a weight based voting scheme for the flame detection system in accordance with an example embodiment of the present disclosure;
FIG. 4A illustrates a flowchart showing a response of the flame detection system corresponding to a final verdict at the end of one second in accordance with an example embodiment of the present disclosure;
FIG. 4B illustrates a flowchart showing response of the flame detection system corresponding to a final verdict at the end of two seconds in accordance with an example embodiment of the present disclosure; and
FIG. 5 illustrates a flowchart showing a method for the flame detection system in accordance with an example embodiment of the present disclosure.

## DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a flame detection system and a method thereof. Embodiments may comprise at least one image capturing unit. Embodiments may be configured to capture one or more images of a field of view (FOV). Embodiments may comprise at least one flame detector. Embodiments may be configured to detect a first set of spectral band data and a second set of spectral band data from the FOV. Embodiments may comprise at least one processor that may be communicatively coupled to the at least one image capturing unit and the at least one flame detector. Embodiments may be configured to configured to classify the one or more images. Embodiments may be configured to classify the first set of spectral band data. Embodiments may be configured to assign a weight to each of the second set of spectral band data based at least on the classification of the one or more images and the classification of the first set of spectral band data. Embodiments may be configured to receive at least one flame count for each of the second set of spectral band data. Embodiments may be configured to determine a weighted count based on the weight assigned to the respective second set of spectral band data, for each flame count. Embodiments may be configured to determine a quantity of weighted counts exceeding its respective threshold value. Embodiments may be configured to determine that a flame exists within the FOV, in an instance in which the quantity is greater than or equal to a quantity threshold value. Embodiments may be configured to determine that a flame does not exist within the FOV, in an instance in which the quantity is less than the quantity threshold value.

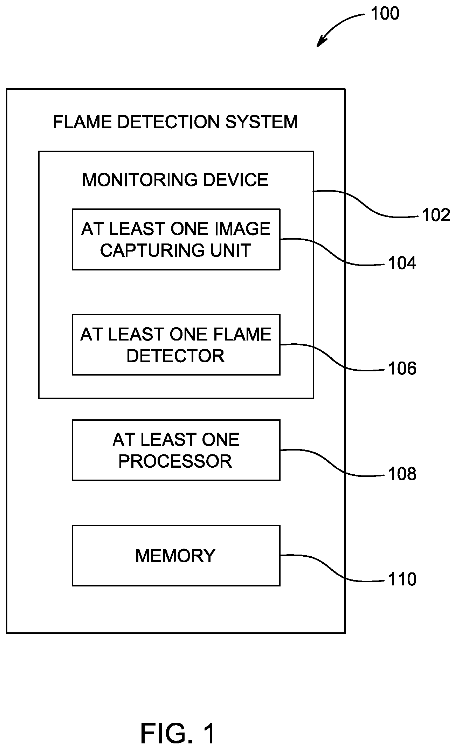

FIG. 1 illustrates a block diagram of a flame detection system 100, in accordance with an example embodiment of the present disclosure.

In some embodiments, the flame detection system 100 may comprise a monitoring device 102. Further, the monitoring device 102 may comprise at least one image capturing unit 104 and at least one flame detector 106. Further, the flame detection system 100 may comprise at least one processor 108 and a memory 110. In some embodiments, the monitoring device 102 may be configured to detect presence of a flame in a field of view (FOV). In one example, the monitoring device 102 may be mounted within a facility (not shown). In some embodiments, the facility may comprise at least one of a warehouse, a factory, an industrial plant, etc. In some embodiments, the monitoring device 102 may be coupled with a power source (not shown). In some embodiments, the power source may be configured to supply a predefined amount of power to the monitoring device 102.

In one example, the monitoring device 102 may be configured to utilize infrared rays, heat radiations, light energy, etc. to detect presence of the flame in the FOV. In one example, the monitoring device 102 may be enclosed within a housing (not shown). In some embodiments, the housing of the monitoring device 102 may be configured to accommodate the at least one image capturing unit 104 and the at least one flame detector 106. Further, the housing may be composed of a material that may prevent any damage to the monitoring device 102. Further, the housing may be constructed with a shape that may ensure a proper accommodation of the at least one image capturing unit 104 and the at least one flame detector 106. In another example, the at least one image capturing unit 104 may be positioned in proximity to the at least one flame detector 106.

In some embodiments, the at least one image capturing unit 104 may be configured to capture one or more images of the FOV in a real time or in near real time. In some embodiments, the real time may correspond to an immediate or near-instantaneous handling of data (i.e., the one or more images) as it is received. Further, the real time may correspond to an instance when the one or more images are captured and available for further processing. In some embodiments, the time period may correspond to the real time may ranges from milliseconds to microseconds. In one example, the at least one image capturing unit 104 may be configured to capture the one or more images of the FOV in a near real time. Further, the near real time comprise a minimal delay while handling the data. In some embodiments, the time period may correspond to the near real time may ranges from seconds, minutes, or a short time period. In some embodiments, the at least one image capturing unit 104 may comprise a set of optical lenses, and a plurality of sensors. In some embodiments, the set of optical lenses may be configured to capture light signals from surroundings. Further, the set of optical lenses may be configured to direct the lights towards the plurality of sensors. Further, the plurality of sensors may be configured to convert the captured analog signals (i.e., light signals) into digital signals. In some embodiments, the at least one image capturing unit 104 may further comprise a preprocessor that may be configured to process the digital signals to generate digital images.

In some embodiments, the at least one flame detector 106 may be configured to detect a first set of spectral band data and a second set of spectral data from the FOV. In some embodiments, the at least one flame detector 106 may be configured to detect an infrared (IR) energy from the FOV. In some embodiments, the IR energy may be emitted by a flame during combustion of a fuel source present in the FOV. In some embodiments, the first set of spectral band data may correspond to a near band IR data. In some embodiments, the near band IR data may include wavelengths that are slightly longer than visible light. Further, the second set of spectral band data may correspond to a long band IR data, a wide band IR data, and an ultraviolet UVC band data. In some embodiments, the long band IR data may correspond to hot $CO_2$ energy spectrum and the wide band IR data may correspond to hot $H_2O$ energy spectrum.

In some embodiments, the at least one processor 108 may be communicatively coupled with the at least one image capturing unit 104 and the at least one flame detector 106. In some embodiments, the at least one processor 108 may include suitable logic, circuitry, and/or interfaces that are operable to execute one or more instructions stored in the memory 110 to perform predetermined operations. In one embodiment, the at least one processor 108 may be configured to decode and execute any instructions received from one or more other electronic devices or server(s). The at least one processor 108 may be configured to execute one or more computer-readable program instructions, such as program instructions to carry out any of the functions described in this description. Further, the at least one processor 108 may be implemented using one or more processor technologies known in the art. Examples of the at least one processor 108 may include, but are not limited to, one or more general purpose processors and/or one or more special purpose processors (e.g., digital signal processors or Field Programmable Gate Array (FPGA) processor).

In some embodiments, the at least one processor 108 may be configured to receive the one or more images from the at least one image capturing unit 104. In some embodiments, the at least one processor 108 may be configured to receive the first set of spectral band data and the second set of spectral band data from the at least one flame detector 106. In some embodiments, the at least one flame detector 106 may be synchronously coupled with the at least one image capturing unit 104. In some embodiments, the at least one flame detector 106 may be configured to detect the first set of spectral band data and the second set of spectral band data concurrently, while the at least one image capturing unit 104 captures the one or more images. For example, in an industrial setting such as an oil refinery, the at least one processor 108 receives real-time images from the at least one image capturing unit 104. Further, the at least one processor 108 receives the first set of spectral band data and the second set of spectral band data from the at least one flame detector 106, which continuously scans for potential fires by detecting specific IR and UVC signatures indicative of different combustion gases like hot $CO_2$ and $H_2O$.

In some embodiments, the at least one processor 108 may be configured to classify the one or more images received from the at least one image capturing unit 104. In one example, the one or more images may be classified into types of scenarios, such as a welding process being performed within the FOV, whether it is day or night, whether the FOV is indoors or outdoors, whether heaters or lights are on within the FOV, whether reflected sunlight exists within the FOV, whether modulated or unmodulated sunlight exists within the FOV, the type of weather that exists within the FOV (e.g., whether it is raining, is fogging, is misty), etc. Further, the at least one processor 108 may be configured to classify the first set of spectral band data. In one example, the first set of spectral band data may be classified into types of scenarios, such as whether the FOV is indoors or outdoors, whether modulated or unmodulated sunlight exists within the FOV, whether it is day or night, etc. In some embodiments, the at least one processor 108 may be configured to assign a weight to each of the second set of spectral band data based at least on the classification of the one or more images and the classification of the first set of spectral band data.

In some embodiments, the at least one processor 108 may be configured to receive a flame count for each of the second set of spectral band. In one example, the flame count received by the at least one processor 108 ranges between 0-5 flame count. In some embodiments, the at least one flame count for each of the second set of spectral band data is for a predefined sample per second. Further, the predefined sample per second may correspond to a number of samples received by the at least one processor 108 in time period. In some embodiments, for each flame count, the at least one processor 108 may be configured to determine a weighted count based on the weight assigned to the respective second set of spectral band data. For example, the weighted count that may be determined by the at least one processor 108 may range between 0-1 weighted count. In some embodiments, for each weighted count, the at least one processor 108 may be configured to determine whether the weighted count exceeds a respective threshold value. In some embodiments, the respective threshold value for each of the weighted count may correspond to a baseline value. In some embodiments, the at least one processor 108 may be configured to determine a quantity of weighted counts exceeding its respective threshold value.

In some embodiments, the at least one processor 108 may be configured to compare a quantity of weighted counts exceeding its respective threshold value with a quantity threshold value. In some embodiments, the at least one processor 108 may be configured to determine that a flame exist within the FOV or that a flame does not exist within the FOV, based at least on the comparison. In an instance in which the quantity of weighted counts is greater or equal to the quantity threshold value, the at least one processor 108 may determine that the flame exists within the FOV. In an instance in which the quantity of weighted counts is less than the quantity threshold value, the at least one processor 108 may determine that the flame does not exist within the FOV.

In some embodiments, the at least one processor 108 may be configured to compare a flame count of each of the instances with a conditional probability data to determine whether the flame exists within the FOV or not. In some embodiments, the flame count of instances may correspond to at least one of that the flame exists within the FOV or the flame does not exist within the FOV. In some embodiments, the conditional probability data may correspond to majority of vote counts for the status of the flame for each of the second set of spectral band.

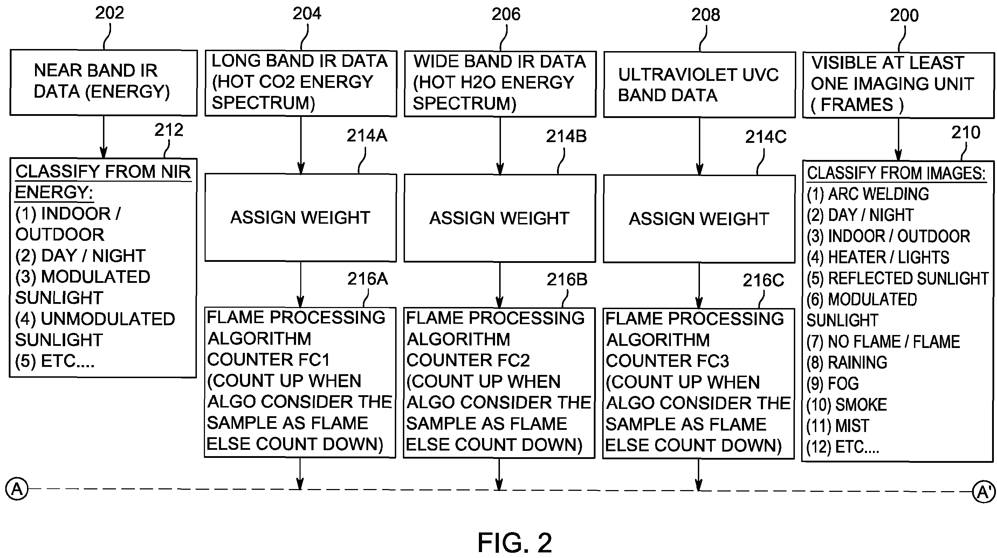

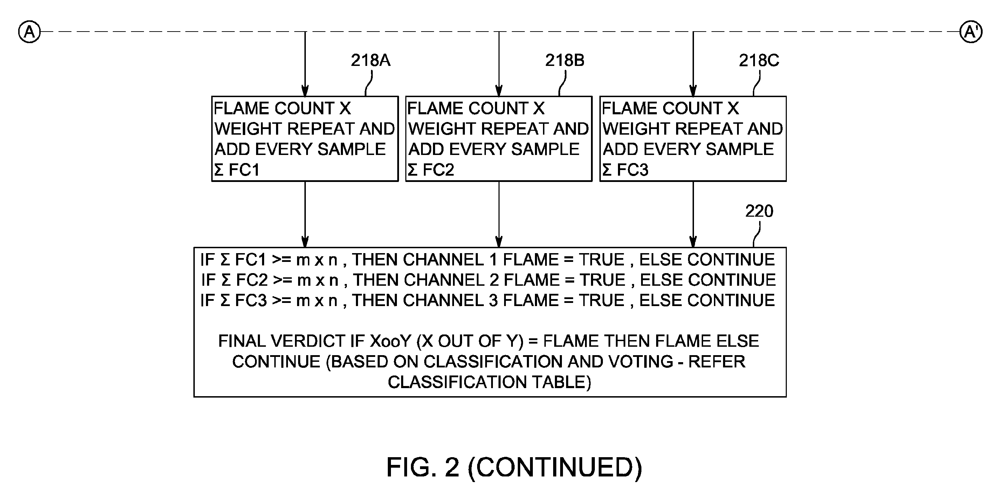

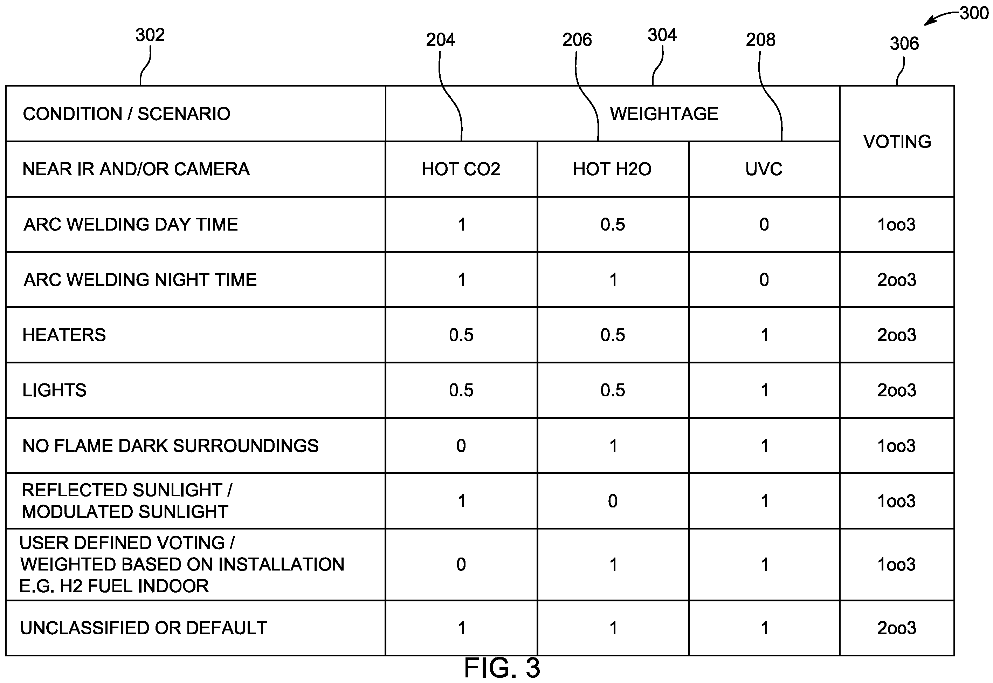

FIG. 2 illustrates a flowchart of the flame detection system 100, in accordance with an example embodiment of the present disclosure. FIG. 3 illustrates a table 300 having data associated with a weight based voting scheme for the flame detection system 100, in accordance with an example embodiment of the present disclosure. FIGS. 2-3 are described in conjunction with FIG. 1.

In some embodiments, the at least one image capturing unit 104 of the monitoring device 102 may be configured to capture the one or more images of the FOV. In some embodiments, the at least one image capturing unit 104 may correspond to a camera sensor. In some embodiments, the camera sensor may be configured to convert the light signals into the electrical signals. Further, the electrical signals may be converted into the digital images using the preprocessor of the at least one image capturing unit 104. In one example, the camera sensor may be constructed by using one or more technologies such as complementary metal-oxide semiconductor (CMOS) or charged coupled device (CCD) technology. In some embodiments, the at least one image capturing unit 104 may be configured to transmit the one or more images to the at least one processor 108. In some embodiments, the one or more images may also be referred as visible at least one image capturing unit (frames) (illustrated by 200).

In some embodiments, the at least one flame detector 106 may be configured to detect the first set of spectral band data and the second set of spectral band data. In some embodiments, the at least one flame detector 106 may correspond to a combination of an infrared (IR) sensor and an ultraviolet (UV) sensor. In one example, when the at least one flame detector 106 correspond to the IR sensor, the at least one flame detector 106 may be configured to detect the IR energy from the FOV. Further, the IR energy that may be detected by the IR sensor may be within an IR frequency range (from 430 terahertz (THz) to 300 gigahertz (GHz)), and an IR wavelength range (from 700 nanometers (nm) to 1 millimeter (mm)). In some embodiments, the first set of spectral band data may correspond to a near band IR data 202 and the second set of spectral band data may correspond to a long band IR data 204, a wide band IR data 206, and an ultraviolet UVC band data 208. In some embodiments, the at least one image capturing unit 104 and the at least one flame detector 106 may be configured to provide the one or more images, the first set of spectral band data, and the second set of spectral band data to the at least one processor 108. In some embodiments, the at least one processor 108 may be configured to perform one or more operations to determine a status of the flame within the FOV. In some embodiments, the status of the flame corresponds to presence of the flame within the FOV or absence of the flame within the FOV.

At operation 210, the at least one processor 108 may be configured to classify the one or more images received from the at least one image capturing unit 104. In some embodiments, the one or more images may be classified into types of arc welding, day/night, indoor/outdoor, heater/lights, reflected sunlight, modulated/unmodulated sunlight, no flame/-flame, raining, fog, smoke, mist, etc. At operation 212, the at least one processor 108 may be configured to classify the first set of spectral band data (i.e., the near band IR data 202). In some embodiments, the first set of spectral band data may be classified into indoor/outdoor, day/night, modulated/unmodulated sunlight, etc.

In some embodiments, the at least one processor 108 may be configured to assign a weight to each of the second set of spectral band data based at least on the classification of the one or more images and the classification of the first set of spectral band data. In some embodiments, the second set of spectral band data may comprise the long band IR data 204, the wide band IR data 206, and the ultraviolet UVC band data 208. At operation 214A, the at least one processor 108 may be configured to assign a weight to the long band IR data 204. In some embodiments, the at least one processor 108 may be configured to refer the data provided in the table 300, or a similar table, to assign the weight to the long band IR data 204. At operation 214B, the at least one processor 108 may be configured to assign a weight to the wide band IR data 206. In some embodiments, the at least one processor 108 may be configured to refer the data provided in the table 300, or a similar table, to assign the weight to the wide band IR data 206. At operation 214C, the at least one processor 108 may be configured to assign a weight to the ultraviolet UVC band data 208. In some embodiments, the at least one processor 108 may be configured to refer the data provided in the table 300, or a similar table, to assign the weight to the ultraviolet UVC band data 208.

It may be noted the operation 214A, operation 214B, and operation 214C may be performed by the at least one processor 108 concurrently.

In some embodiments, the at least one processor 108 may be configured to receive the flame count for each of the second set of spectral band data. At operation 216A, the at least one processor 108 may be configured to receive the flame count for the long band IR data 204. In some embodiments, the at least one processor 108 may be configured to utilize a flame processing algorithm counter FC1. Further, the flame processing algorithm may cause the at least one processor 108 to count up when the flame processing algorithm consider the sample as the flame or count down when the flame processing algorithm consider the sample as not flame. At operation 216B, the at least one processor 108 may be configured to receive the flame count for the wide band IR data 206. In some embodiments, the at least one processor 108 may be configured to utilize the flame processing algorithm counter FC2. Further, the flame processing algorithm may cause the at least one processor 108 to count up when the flame processing algorithm consider the sample as flame else count down. At operation 216C, the at least one processor 108 may be configured to receive the flame count for the ultraviolet UVC band data 208. In some embodiments, the at least one processor 108 may be configured to utilize the flame processing algorithm counter FC3. Further, the flame processing algorithm may cause the at least one processor 108 to count up when the flame processing algorithm consider the sample as flame else count down.

As explained at the operation 216A, operation 216B, and operation 216C, each sample of the first set of spectral band data and the second set of spectral band data may comprise one or more energies of different spectral bands (e.g., power spectral densities, peak amplitudes, etc.) and ratios of each spectral band. Further, the at least one processor 108 may be configured to count up if the one or more energies of different spectral bands and ratios of each spectral band correlates with a plurality of conditions of the flame. Further, the plurality of conditions of the flame may correspond to the one or more energies of the flame that is generated by combustion of various fuel sources. Further, the at least one processor 108 may be configured to count down if the one or more energies of different spectral bands and ratios of each spectral band may not correlate with the plurality of conditions of the flame.

It may be noted the operation 216A, operation 216B, and operation 216C may be performed by the at least one processor 108 concurrently.

In some embodiments, the at least one processor 108 may be configured to determine the weighted count based on the weight assigned to the respective second set of spectral band data. At operation 218A, the at least one processor 108 may be configured to determine the weighted count based on the weight assigned to the long band IR data 204. In some embodiments, the weighted count may be determined by an equation:

$$\sum FC1 = FLAME\ COUNT \times ASSIGNED\ WEIGHT\ OF\ THE\ LONG\ BAND\ IR\ DATA$$

At operation 218B, the at least one processor 108 may be configured to determine the weighted count based on the weight assigned to the wide band IR data 206. In some embodiments, the weighted count may be determined by an equation:

$$\sum FC2 = FLAME\ COUNT \times ASSIGNED\ WEIGHT\ OF\ THE\ WIDE\ BAND\ IR\ DATA$$

At operation 218C, the at least one processor 108 may be configured to determine the weighted count based on the weight assigned to the ultraviolet UVC band data 208. In some embodiments, the weighted count may be determined by an equation:

$$\sum FC3 = FLAME\ COUNT$$
$$\times ASSIGNED\ WEIGHT\ OF\ THE\ ULTRAVIOLET\ UVC\ BAND\ DATA$$

At operation 220, for each weighted count, the at least one processor 108 may be configured to determine whether the weighted count exceeds the respective threshold value. In some embodiments, the at least one processor 108 may be configured to determine a quantity of weighted counts exceeding its respective threshold value. In some embodiments, the at least one processor 108 may be configured to determine that a flame exist within the FOV or that a flame does not exist within the FOV, based at least on the comparison. In an instance in which the quantity of weighted counts is greater or equal to the quantity threshold value, the at least one processor 108 may determine that the flame exists within the FOV. In an instance in which the quantity of weighted counts is less than the quantity threshold value, the at least one processor 108 may determine that the flame does not exist within the FOV.

In some embodiments, the at least one processor may be configured determine presence or absence of flame within the FOV by using the following equation:

$$IF\ \sum FC1 >= M \times N, THEN\ CHANNEL\ 1\ FLAME = TRUE, ELSE\ CONTINUE$$

$$IF\ \sum FC2 >= M \times N, THEN\ CHANNEL\ 2\ FLAME = TRUE, ELSE\ CONTINUE$$

$$IF\ \sum FC3 >= M \times N, THEN\ CHANNEL\ 3\ FLAME = TRUE, ELSE\ CONTINUE$$

Herein, M= desired response time and n= number of samples and frames per second.

In some embodiments, the at least one processor 108 may be configured to provide a final verdict, whether the flame exists within the FOV or not. Further, the final verdict of the at least one processor 108 may be determined by a comparison of the flame count of each of the instances and the conditional probability data. In some embodiments, the final verdict of the at least one processor 108 may depend upon the data provided from the table 300.

As illustrated in FIG. 3, the table 300 comprises one or more columns. Further, the one or more columns may comprise condition/scenario 302, weightage 304, and voting 306. In some embodiments, the weightage 304 may further comprise one or more sub-columns. Further, the one or more sub-columns may comprise the long band IR data (hot $CO_2$) 204, the wide band IR data (hot $H_2O$) 206, and the ultraviolet UVC band data 208. In one instance, when the condition corresponds to arc welding day time, the long band IR data (hot $CO_2$) 204 has a weightage of 1, the wide band IR data (hot $H_2O$) 206 has a weightage of 0.5, and the ultraviolet UVC band data 208 has a weightage of 0. Further, the voting 306 for this scenario is 1 out of 3 (1oo3).

In another instance, when the condition corresponds to arc welding night time, the long band IR data (hot $CO_2$) 204 has a weightage of 1, the wide band IR data (hot $H_2O$) 206 has a weightage of 1, and the ultraviolet UVC band data 208 has weightage of 0. Further, the voting 306 for this scenario is 2 out of 3 (2oo3). In another instance, when the condition corresponds to heaters, the long band IR data (hot $CO_2$) 204 has a weightage of 0.5, the wide band IR data (hot $H_2O$) 206 has a weightage of 0.5, and the ultraviolet UVC band data 208 has weightage of 1. Further, the voting 306 for this scenario is 2 out of 3 (2oo3). In another instance, when the condition corresponds to lights, the long band IR data (hot $CO_2$) 204 has a weightage of 0.5, the wide band IR data (hot $H_2O$) 206 has a weightage of 0.5, and the ultraviolet UVC band data 208 has weightage of 1. Further, the voting 306 for this scenario is 2 out of 3 (2oo3).

In another instance, when the condition corresponds to no flame dark surroundings, the long band IR data (hot $CO_2$) 204 has a weightage of 0, the wide band IR data (hot $H_2O$) 206 has a weightage of 1, and the ultraviolet UVC band data 208 has weightage of 1. Further, the voting 306 for this scenario is 1 out of 3 (1oo3). In another instance, when the condition corresponds to reflected sunlight/modulated sunlight, the long band IR data (hot $CO_2$) 204 has a weightage of 1, the wide band IR data (hot $H_2O$) 206 has a weightage of 0, and the ultraviolet UVC band data 208 has weightage of 1. Further, the voting 306 for this scenario is 1 out of 3 (1oo3). In another instance, when the condition corresponds to user defined voting/weighted based on installation e.g., $H_2$ fuel indoor, the long band IR data (hot $CO_2$) 204 has a weightage of 0, the wide band IR data (hot $H_2O$) 206 has a weightage of 1, and the ultraviolet UVC band data 208 has a weightage of 1. Further, the voting 306 for this scenario is 1 out of 3 (1oo3). Thereafter, when the condition corresponds to unclassified or default, the long band IR data (hot $CO_2$) 204 has a weightage of 1, the wide band IR data (hot $H_2O$) 206 has a weightage of 1, and the ultraviolet UVC band data 208 has a weightage of 1. Further, the voting 306 for this scenario is 2 out of 3 (2oo3).

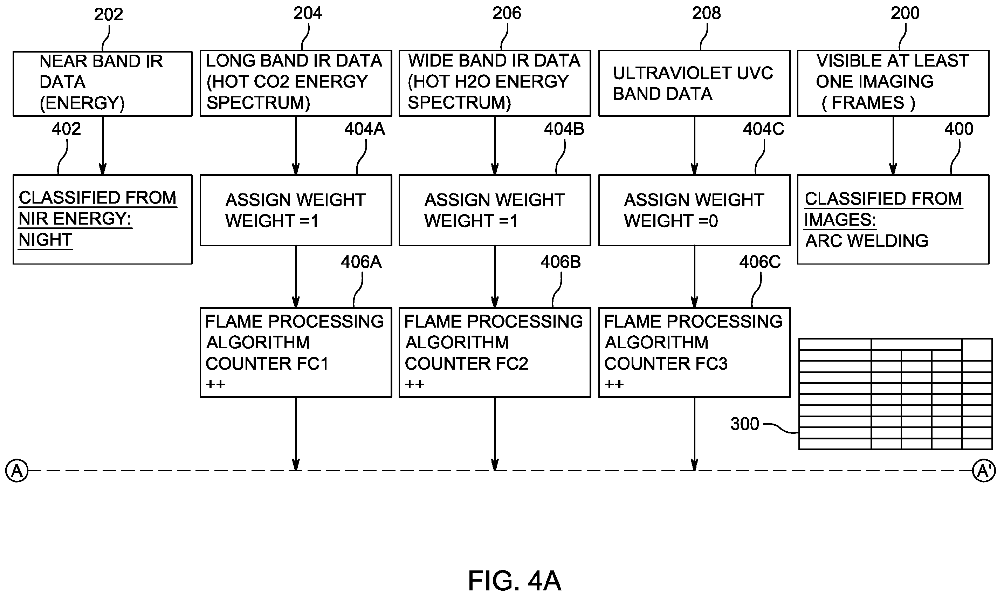

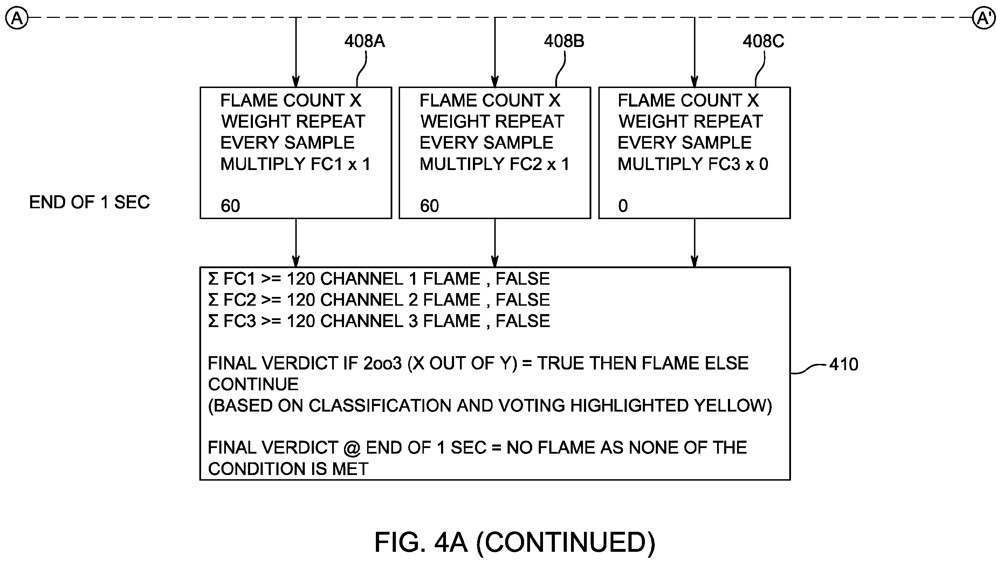

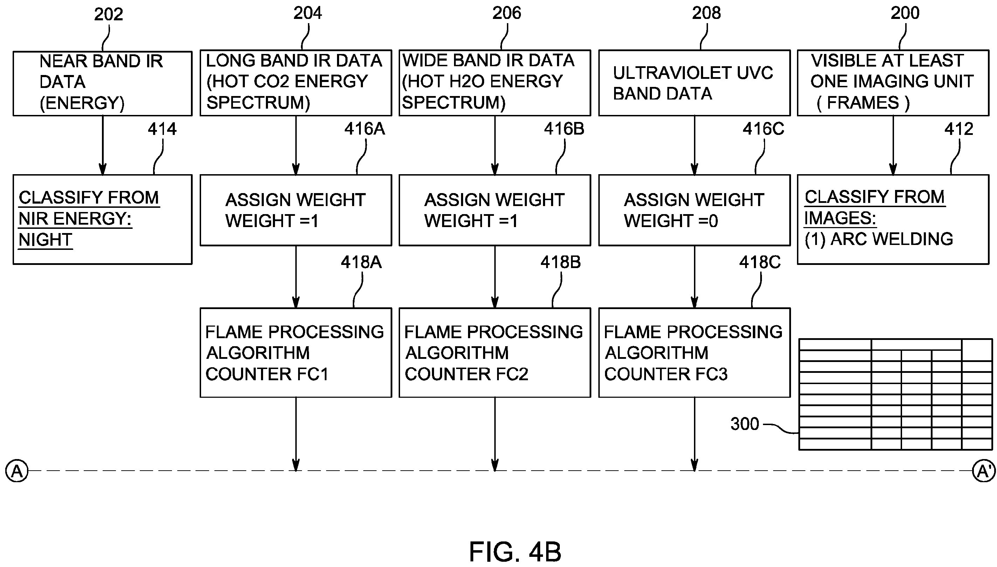

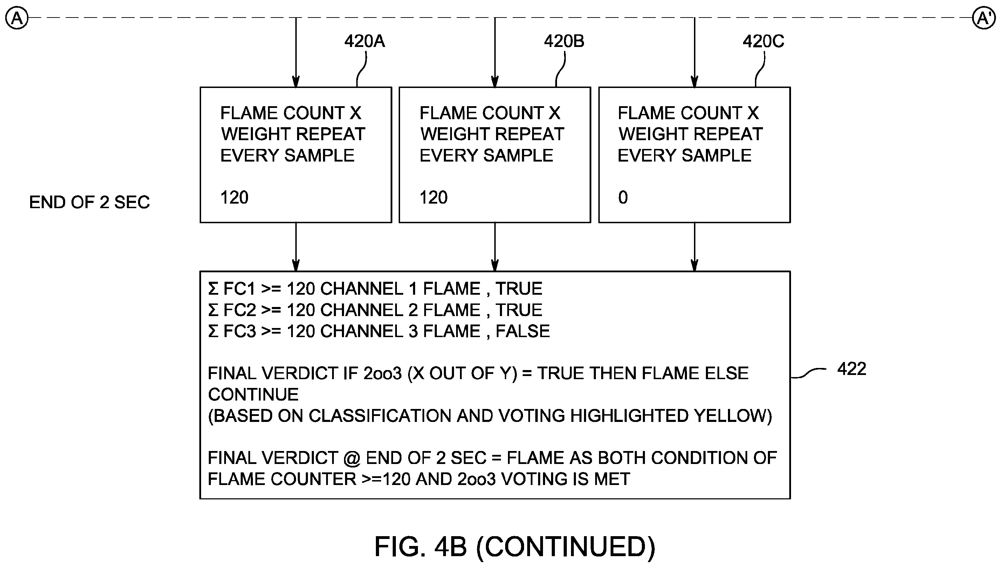

FIG. 4A illustrates a flowchart showing a response of the flame detection system 100 corresponding to a final verdict at the end of one second, in accordance with an example embodiment of the present disclosure. FIG. 4B illustrates a flowchart showing response of the flame detection system 100 corresponding to a final verdict at the end of two seconds, in accordance with an example embodiment of the present disclosure.

As illustrated in FIG. 4A, the flame detection system 100 may be operated for the first iteration. In some embodiments, the first iteration may be conducted up to a first threshold time period (i.e., 1 sec). In some embodiments, the at least one image capturing unit 104 of the monitoring device 102 may be configured to capture the one or more images of the FOV. In some embodiments, the at least one image capturing unit 104 may be configured to transmit the one or more images to the at least one processor 108. In some embodiments, the one or more images may also be referred as visible at least one image capturing unit (frames) (illustrated by 200). In some embodiments, the at least one flame detector 106 may be configured to detect the first set of spectral band data and the second set of spectral band data. In some embodiments, the first set of spectral band data may correspond to the near band IR data 202 and the second set of spectral band data may correspond to the long band IR data 204, the wide band IR data 206, and the ultraviolet UVC band data 208. In some embodiments, the at least one processor 108 may be configured to perform one or more operations during the first threshold time period to determine the status of the flame within the FOV. In some embodiments, the status of the flame corresponds to presence of the flame within the FOV or absence of the flame within the FOV.

At operation 400, the at least one processor 108 may be configured to classify the one or more images received from the at least one image capturing unit 104. As illustrated in FIG. 4A, the one or more images may be classified as arc welding. At operation 402, the at least one processor 108 may be configured to classify the first set of spectral band data (i.e., the near band IR data 202). In some embodiments, the first set of spectral band data may be classified as night.

In some embodiments, the at least one processor 108 may be configured to assign a weight to each of the second set of spectral band data based at least on the classification of the one or more images and the classification of the first set of spectral band data. At operation 404A, the at least one processor 108 may be configured to assign a weight to the long band IR data 204 = 1. At operation 404B, the at least one processor 108 may be configured to assign a weight to the wide band IR data 206 = 1. At operation 404C, the at least one processor 108 may be configured to assign a weight to the ultraviolet UVC band data 208 = 0.

As explained at the operation 404A, operation 404B, and operation 404C, each sample of the first set of spectral band data and the second set of spectral band data may comprise one or more energies of different spectral bands (e.g., power spectral densities, peak amplitudes, etc.) and ratios of each spectral bands. Further, the at least one processor 108 may be configured to count up if the one or more energies of different spectral bands and ratios of each spectral bands correlates with a plurality of conditions of the flame. Further, the plurality of conditions of the flame may correspond to the one or more energies of the flame that may be generated by combustion of various fuel sources. Further, the at least one processor 108 may be configured to count down if the one or more energies of different spectral bands and ratios of each spectral bands may not correlate with the plurality of conditions of the flame.

It may be noted the operation 404A, operation 404B, and operation 404C may be performed by the at least one processor 108 concurrently.

In some embodiments, the at least one processor 108 may be configured to receive the flame count for each of the second set of spectral band data. At operation 406A, the at least one processor 108 may be configured to receive the flame count for the long band IR data 204. Further, the flame processing algorithm may cause the at least one processor 108 to count up as the flame processing algorithm consider the sample as the flame. At operation 406B, the at least one processor 108 may be configured to receive the flame count for the wide band IR data 206. Further, the flame processing algorithm may cause the at least one processor 108 to count up as the flame processing algorithm consider the sample as flame. At operation 406C, the at least one processor 108 may be configured to receive the flame count for the ultraviolet UVC band data 208. Further, the flame processing algorithm may cause the at least one processor 108 to count up as the flame processing algorithm consider the sample as flame.

It may be noted the operation 406A, operation 406B, and operation 406C may be performed by the at least one processor 108 concurrently.

In some embodiments, the at least one processor 108 may be configured to determine the weighted count based on the weight assigned to the respective second set of spectral band data. At operation 408A, the at least one processor 108 may be configured to determine the weighted count based on the weight assigned to the long band IR data 204. In some embodiments, the weighted count may be determined by an equation:

$$\sum FC1 = FC1 \times 1 = 60$$

In some embodiments, 60 may represent a number of samples processed by the at least one processor 108 in 1 second, as a sampling rate for data processing considered as 60 samples/second. Therefore, it may be considered that upon counting up to 60 if the weight is 1, then the FC1 (i.e., long band IR data 204) may declare a flame in 1 second when the flame is continuous and the conditions are met.

At operation 408B, the at least one processor 108 may be configured to determine the weighted count based on the weight assigned to the wide band IR data 206. In some embodiments, the weighted count may be determined by an equation:

$$\sum FC2 = FC2 \times 1 = 60$$

In some embodiments, 60 may represent a number of samples processed by the at least one processor 108 in 1 second, as a sampling rate for data processing considered as 60 samples/second. Therefore, it may be considered that upon counting up to 60 if the weight is 1, then the FC2 (i.e., wide band IR data 206) may declare a flame in 1 second when the flame is continuous and the conditions are met.

At operation 408C, the at least one processor 108 may be configured to determine the weighted count based on the weight assigned to the ultraviolet UVC band data 208. In some embodiments, the weighted count may be determined by an equation:

$$\sum FC3 = FC3 \times 1 = 0$$

At operation 410, in some embodiments, for each weighted count, the at least one processor 108 may be configured to determine whether the weighted count exceeds the respective threshold value. In some embodiments, the at least one processor 108 may be configured to determine a quantity of weighted counts exceeding its respective threshold value. In some embodiments, the at least one processor 108 may be configured to determine that a flame exist within the FOV or that a flame does not exist within the FOV, based at least on the comparison. In an instance in which the quantity of weighted counts is greater or equal to a quantity threshold value (i.e., 120), the at least one processor 108 may determine that the flame exists within the FOV. In an instance in which the quantity of weighted counts is less than the quantity threshold value (i.e., 120), the at least one processor 108 may determine that the flame does not exist within the FOV. In some embodiments, the status of the flame may be determined by the at least one processor 108 for the first threshold time period. In some embodiments, the at least one processor may consider one or more conditions to determine the status of the flame:

$$\sum FC1 >= 120 \; CHANNEL \; 1 \; FLAME, FALSE$$

$$\sum FC2 >= 120 \; CHANNEL \; 2 \; FLAME, FALSE$$

$$\sum FC3 >= 120 \; CHANNEL \; 3 \; FLAME, FALSE$$

In some embodiments, the at least one processor 108 may be configured to provide the final verdict, whether the flame exists within the FOV or not. Further, the final verdict of the at least one processor 108 may be determined by a comparison of the count of each of the instances and the conditional probability data. In some embodiments, the final verdict of the at least one processor 108 may depend upon the data provided from the table 300. Further, the final verdict may be provided by the at least one processor 108 in accordance with the voting 306 column of the table 300. In some embodiments, after the first threshold period of time, the flame detection system 100 determines the no flame status, based at least on the data provided in the table 300.

As illustrated in FIG. 4B, the flame detection system 100 may be operated for the second iteration. In some embodiments, the second iteration may be conducted up to a second threshold time period (i.e., 2 secs). In some embodiments, the at least one image capturing unit 104 of the monitoring device 102 may be configured to capture the one or more images of the FOV. In some embodiments, the at least one image capturing unit 104 may be configured to transmit the one or more images to the at least one processor 108. In some embodiments, the one or more images may also be referred as visible at least one image capturing unit (frames) (illustrated by 200). In some embodiments, the at least one flame detector 106 may be configured to detect the first set of spectral band data and the second set of spectral band data. In some embodiments, the first set of spectral band data may correspond to the near band IR data 202 and the second set of spectral band data may correspond to the long band IR data 204, the wide band IR data 206, and the ultraviolet UVC band data 208. In some embodiments, the at least one processor 108 may be configured to perform one or more operations during the first threshold time period to determine the status of the flame within the FOV.

At operation 412, the at least one processor 108 may be configured to classify the one or more images received from the at least one image capturing unit 104. As illustrated in FIG. 4B, the one or more images may be classified as arc welding. At operation 414, the at least one processor 108 may be configured to classify the first set of spectral band data (i.e., the near band IR data 202). In some embodiments, the first set of spectral band data may be classified as night.

In some embodiments, the at least one processor 108 may be configured to assign a weight to each of the second set of spectral band data based at least on the classification of the one or more images and the classification of the first set of spectral band data. At operation 416A, the at least one processor 108 may be configured to assign a weight to the long band IR data 204 = 1. At operation 416B, the at least one processor 108 may be configured to assign a weight to the wide band IR data 206 = 1. At operation 416C, the at least one processor 108 may be configured to assign a weight to the ultraviolet UVC band data 208 = 0.

It may be noted the operation 416A, operation 416B, and operation 416C may be performed by the at least one processor 108 concurrently.

In some embodiments, the at least one processor 108 may be configured to receive the flame count for each of the second set of spectral band data. At operation 418A, the at least one processor 108 may be configured to receive the flame count for the long band IR data 204. Further, the flame processing algorithm may cause the at least one processor 108 to count up as the flame processing algorithm consider the sample as flame. At operation 418B, the at least one processor 108 may be configured to receive the count for the wide band IR data 206. Further, the flame processing algorithm may cause the at least one processor 108 to count up as the flame processing algorithm consider the sample as flame. At operation 418C, the at least one processor 108 may be configured to receive the flame count for the ultraviolet UVC band data 208. Further, the flame processing algorithm may cause the at least one processor 108 to count up as the flame processing algorithm consider the sample as flame.

As explained at the operation 418A, operation 418B, and operation 418C, each sample of the first set of spectral band data and the second set of spectral band data may comprise one or more energies of different spectral bands (e.g., power spectral densities, peak amplitudes, etc.) and ratios of each spectral bands. Further, the at least one processor 108 may be configured to count up if the one or more energies of different spectral bands and ratios of each spectral bands correlates with a plurality of conditions of the flame. Further, the plurality of conditions of the flame may correspond to the one or more energies of the flame that may be generated by combustion of various fuel sources. Further, the at least one processor 108 may be configured to count down if the one or more energies of different spectral bands and ratios of each spectral bands may not correlate with the plurality of conditions of the flame.

It may be noted the operation 418A, operation 418B, and operation 418C may be performed by the at least one processor 108 concurrently.

In some embodiments, the at least one processor 108 may be configured to determine the weighted count based on the weight assigned to the respective second set of spectral band data. At operation 420A, the at least one processor 108 may be configured to determine the weighted count based on the weight assigned to the long band IR data 204. In some embodiments, the weighted count may be determined by an equation:

$$\sum FC1 = FC1 \times 1 = 120$$

In some embodiments, 120 may represent a number of samples processed by the at least one processor 108 in 2 seconds, as a sampling rate for data processing considered as 120 samples/second. Therefore, it may be considered that upon counting up to 120 if the weight is 1, then the FC1 (i.e., long band IR data 204) may declare a flame in 2 seconds when the flame is continuous and the conditions are met.

At operation 420B, the at least one processor 108 may be configured to determine the weighted count based on the weight assigned to the wide band IR data 206. In some embodiments, the weighted count may be determined by an equation:

$$\sum FC2 = FC2 \times 1 = 120$$

In some embodiments, 120 may represent a number of samples processed by the at least one processor 108 in 2 seconds, as a sampling rate for data processing considered as 120 samples/second. Therefore, it may be considered that upon counting up to 120 if the weight is 1, then the FC2 (i.e., wide band IR data 206) may declare a flame in 2 seconds when the flame is continuous and the conditions are met.

At operation 420C, the at least one processor 108 may be configured to determine the weighted count based on the weight assigned to the ultraviolet UVC band data 208. In some embodiments, the weighted count may be determined by an equation:

$$\sum FC3 = FC3 \times 1 = 0$$

At operation 422, in some embodiments, for each weighted count, the at least one processor 108 may be configured to determine whether the weighted count exceeds the respective threshold value. In some embodiments, the at least one processor 108 may be configured to determine a quantity of weighted counts exceeding its respective threshold value. In some embodiments, the at least one processor 108 may be configured to determine that a flame exist within the FOV or that a flame does not exist within the FOV, based at least on the comparison. In an instance in which the quantity of weighted counts is greater or equal to a quantity threshold value (i.e., 120), the at least one processor 108 may determine that the flame exists within the FOV. In an instance in which the quantity of weighted counts is less than the quantity threshold value (i.e., 120), the at least one processor 108 may determine that the flame does not exist within the FOV. In some embodiments, the status of the flame may be determined by the at least one processor 108 for the first threshold time period. In some embodiments, the at least one processor may consider one or more conditions to determine the status of the flame:

$$\sum FC1 >= 120 \; CHANNEL \; 1 \; FLAME, TRUE$$

$$\sum FC2 >= 120 \; CHANNEL \; 2 \; FLAME, TRUE$$

$$\sum FC3 >= 120 \; CHANNEL \; 3 \; FLAME, FALSE$$

In some embodiments, the final verdict of the at least one processor 108 may depend upon the data provided from the table 300. Further, the final verdict may be provided by the at least one processor 108 in accordance with the voting 306 column of the table 300. In some embodiments, after the first threshold period of time, the flame detection system 100 determines the flame status, based at least on the data provided in the table 300.

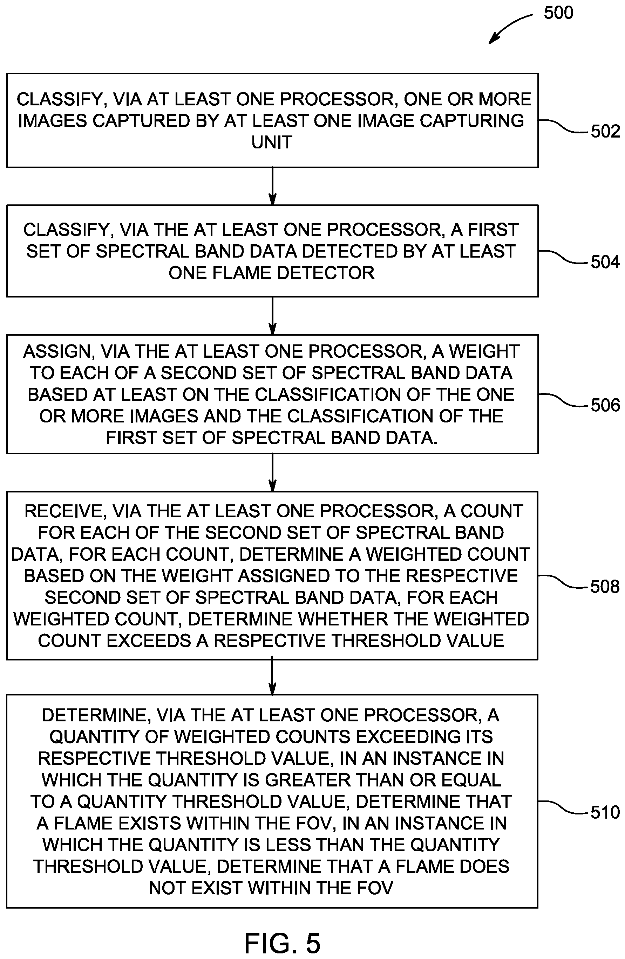

FIG. 5 illustrates a flowchart showing a method 500 of the flame detection system 100, in accordance with an example embodiment of the present disclosure. FIG. 5 is described in conjunction with FIGS. 1-4B.

At operation 502, the at least one processor 108 may be configured to classify the one or more images captured by the at least one image capturing unit 104. In some embodiments, the at least one image capturing unit 104 corresponds to a camera sensor. In some embodiments, the one or more images may be classified into types of welding processes within the FOV, day/night, indoor/outdoor, heater/lights, reflected sunlight, modulated/unmodulated sunlight, or types of weather.

At operation 504, the at least one processor 108 may be configured to classify the first set of spectral band data detected by the at least one flame detector 106. In some embodiments, the at least one flame detector 106 may correspond to a combination of an infrared (IR) sensor and an ultraviolet (UV) sensor. In some embodiments, the first set of spectral band data may correspond to the near band IR data 202. In some embodiments, the first set of spectral band data may be classified into indoor/outdoor, modulated/unmodulated sunlight, or day/night.

At operation 506, the at least one processor 108 may be configured to assign the weight to each of the second set of spectral band data detected from the FOV based at least on the classification of the one or more images and the classification of the first set of spectral band data. In some embodiments, the second set of spectral band data may correspond to the long band IR data 204, the wide band IR data 206, and the ultraviolet UVC band data 208. For example, the at least one processor 108 assigns the weight to each of the second set of spectral band data between a range of 0-5.

At operation 508, the at least one processor 108 may be configured to receive the flame count for each of the second set of spectral band. For example, the flame count received by the at least one processor 108 ranges between 0-5 flame count. In some embodiments, for each flame count, the at least one processor 108 may be configured to determine the weighted count based on the weight assigned to the respective second set of spectral band data. For example, the weighted count that may be determined by the at least one processor 108 may range between 0-1 weighted count. In some embodiments, for each weighted count, the at least one processor 108 may be configured to determine whether the weighted count exceeds a respective threshold value. In some embodiments, the respective threshold value for each of the weighted count may correspond to a baseline value (i.e., 2 counts or 3 counts).

At operation 510, the at least one processor 108 may be configured to determine the quantity of weighted counts exceeding its respective threshold value. In some embodiments, the at least one processor 108 may be configured to determine that a flame exist within the FOV or that a flame does not exist within the FOV. In an instance in which the quantity of weighted counts is greater or equal to the quantity threshold value, the at least one processor 108 may determine that the flame exists within the FOV. In an instance in which the quantity of weighted counts is less than the quantity threshold value, the at least one processor 108 may determine that the flame does not exist within the FOV.

The present invention provides various embodiments to prevent any false alarm while detecting the flame in the FOV by the at least one processor 108. Embodiments may be configured to enhance accuracy of the flame detection system 100 using the at least one flame detector 106 and the at least one image capturing unit 104. Embodiments may be configured to detect a status of the flame by classifying the data received from the at least one flame detector 106 and the at least image capturing unit 104.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

**Claims**

1. A flame detection system comprising:

    at least one image capturing unit configured to capture one or more images of a field of view (FOV);
    at least one flame detector configured to detect a first set of spectral band data and a second set of spectral band data from the FOV; and
    at least one processor communicatively coupled to the at least one image capturing unit and the at least one flame detector, wherein the at least one processor is configured to:

        classify the one or more images;
        classify the first set of spectral band data;
        assign a weight to each of the second set of spectral band data based at least on the classification of the one or more images and the classification of the first set of spectral band data;
        receive at least one flame count for each of the second set of spectral band data;
        for each flame count, determine a weighted count based on the weight assigned to the respective second set of spectral band data;
        for each weighted count, determine whether the weighted count exceeds a respective threshold value;
        determine a quantity of weighted counts exceeding its respective threshold value;
        in an instance in which the quantity is greater than or equal to a quantity threshold value, determine that a flame exists within the FOV; and
        in an instance in which the quantity is less than the quantity threshold value, determine that a flame does not exist within the FOV.

2. The flame detection system of claim 1, wherein the at least one image capturing unit corresponds to a camera sensor and the at least one flame detector corresponds to a combination of an infrared (IR) sensor and an ultraviolet (UV) sensor.

3. The flame detection system of claim 2, wherein the first set of spectral band data corresponds to a near band IR data and the second set of spectral band data corresponds to a long band IR data, a wide band IR data, and an ultraviolet UVC band data.

4. The flame detection system of claim 3, wherein the long band IR data corresponds to hot $CO_2$ energy spectrum and the wide band IR data corresponds to hot $H_2O$ energy spectrum.

5. The flame detection system of claim 1, wherein the one or more images are classified into types of welding processes within the FOV, day/night, indoor/outdoor, heater/lights, reflected sunlight, modulated/unmodulated sunlight, or types of weather.

6. The flame detection system of claim 1, wherein the first set of spectral band data is classified into indoor/outdoor, modulated/unmodulated sunlight, or day/night.

7. The flame detection system of claim 1, wherein the at least one flame count for each of the second set of spectral band data is for a predefined sample per second, wherein the predefined sample per second corresponds to a number of samples received by the at least one processor in time period.

8. The flame detection system of claim 1, wherein the at least one processor is further configured to compare a count of each of the instances where the flame exists within the FOV or the flame does not exist within the FOV with a conditional probability data to determine whether the flame exists within the FOV or not.

9. The flame detection system of claim 8, wherein the conditional probability data depends on the quantity of weighted counts and respective threshold value.

10. The flame detection system of claim 1, wherein the at least one image capturing unit is positioned in proximity to the at least one flame detector or the at least one image capturing unit and the at least one flame detector are placed within a housing.

11. A method for flame detection, the method comprising:

classifying, via at least one processor, one or more images of a field of view (FOV) captured by at least one image capturing unit;
classifying, via the at least one processor, a first set of spectral band data detected by at least one flame detector from the FOV;
assigning, via the at least one processor, a weight to each of a second set of spectral band data detected by the at least one flame detector from the FOV based at least on the classification of the one or more images and the classification of the first set of spectral band data;
receiving, via the at least one processor, at least one flame count for each of the second set of spectral band data;
determining, via the at least one processor, a weighted count for each flame count, based on the weight assigned to the respective second set of spectral band data;
determining, via the at least one processor, whether the weighted count exceeds a respective threshold value, for each weighted count;
determining, via the at least one processor, a quantity of weighted counts exceeding its respective threshold value;
determining, via the at least one processor, that a flame exists within the FOV, in an instance in which the quantity is greater than or equal to a quantity threshold value; and
determining, via the at least one processor, that a flame does not exist within the FOV, in an instance in which the quantity is less than the quantity threshold value.

12. The method of claim 11, wherein the at least one image capturing unit corresponds to a camera sensor and the at least one flame detector corresponds to a combination of an infrared (IR) sensor and an ultraviolet (UV) sensor.

13. The method of claim 12, wherein the first set of spectral band data corresponds to a near band IR data and the second set of spectral band data corresponds to a long band IR data, a wide band IR data, and an ultraviolet UVC band counts.

14. The method of claim 13, wherein the long band IR data corresponds to hot $CO_2$ energy spectrum and the wide band IR data corresponds to hot $H_2O$ energy spectrum.

**15.** The method of claim 11 further comprising classifying, via the at least one processor, the one or more images into types of welding processes within the FOV, day/night, indoor/outdoor, heater/lights, reflected sunlight, modulated/unmodulated sunlight, or types of weather.

100

FLAME DETECTION SYSTEM

MONITORING DEVICE 102

AT LEAST ONE IMAGE CAPTURING UNIT 104

AT LEAST ONE FLAME DETECTOR 106

AT LEAST ONE PROCESSOR 108

MEMORY 110

FIG. 1

EP 4 685 765 A1

| 202 | 204 | 206 | 208 | 200 |
|---|---|---|---|---|
| NEAR BAND IR DATA (ENERGY) | LONG BAND IR DATA (HOT CO2 ENERGY SPECTRUM) | WIDE BAND IR DATA (HOT H2O ENERGY SPECTRUM) | ULTRAVIOLET UVC BAND DATA | VISIBLE AT LEAST ONE IMAGING UNIT ( FRAMES ) |
| ↓ 212 | ↓ 214A | ↓ 214B | ↓ 214C | ↓ 210 |
| CLASSIFY FROM NIR ENERGY: (1) INDOOR / OUTDOOR (2) DAY / NIGHT (3) MODULATED SUNLIGHT (4) UNMODULATED SUNLIGHT (5) ETC.... | ASSIGN WEIGHT | ASSIGN WEIGHT | ASSIGN WEIGHT | CLASSIFY FROM IMAGES: (1) ARC WELDING (2) DAY / NIGHT (3) INDOOR / OUTDOOR (4) HEATER / LIGHTS (5) REFLECTED SUNLIGHT (6) MODULATED SUNLIGHT (7) NO FLAME / FLAME (8) RAINING (9) FOG (10) SMOKE (11) MIST (12) ETC.... |
| | ↓ 216A | ↓ 216B | ↓ 216C | |
| | FLAME PROCESSING ALGORITHM COUNTER FC1 (COUNT UP WHEN ALGO CONSIDER THE SAMPLE AS FLAME ELSE COUNT DOWN) | FLAME PROCESSING ALGORITHM COUNTER FC2 (COUNT UP WHEN ALGO CONSIDER THE SAMPLE AS FLAME ELSE COUNT DOWN) | FLAME PROCESSING ALGORITHM COUNTER FC3 (COUNT UP WHEN ALGO CONSIDER THE SAMPLE AS FLAME ELSE COUNT DOWN) | |

Ⓐ — — — — — — — — — — — — — — — — — — — — Ⓐ'

## FIG. 2

EP 4 685 765 A1

Ⓐ — — — — — — — — — — — — — — — — — — — — — — — — — — — — — — — — — Ⓐ'

218A      218B      218C

| FLAME COUNT X WEIGHT REPEAT AND ADD EVERY SAMPLE $\Sigma$ FC1 | FLAME COUNT X WEIGHT REPEAT AND ADD EVERY SAMPLE $\Sigma$ FC2 | FLAME COUNT X WEIGHT REPEAT AND ADD EVERY SAMPLE $\Sigma$ FC3 |

220

IF $\Sigma$ FC1 >= m x n , THEN CHANNEL 1 FLAME = TRUE , ELSE CONTINUE
IF $\Sigma$ FC2 >= m x n , THEN CHANNEL 2 FLAME = TRUE , ELSE CONTINUE
IF $\Sigma$ FC3 >= m x n , THEN CHANNEL 3 FLAME = TRUE , ELSE CONTINUE

FINAL VERDICT IF XooY (X OUT OF Y) = FLAME THEN FLAME ELSE CONTINUE (BASED ON CLASSIFICATION AND VOTING - REFER CLASSIFICATION TABLE)

FIG. 2 (CONTINUED)

| CONDITION / SCENARIO | WEIGHTAGE | | | VOTING |
|---|---|---|---|---|
| NEAR IR AND/OR CAMERA | HOT CO2 | HOT H2O | UVC | |
| ARC WELDING DAY TIME | 1 | 0.5 | 0 | 1oo3 |
| ARC WELDING NIGHT TIME | 1 | 1 | 0 | 2oo3 |
| HEATERS | 0.5 | 0.5 | 1 | 2oo3 |
| LIGHTS | 0.5 | 0.5 | 1 | 2oo3 |
| NO FLAME DARK SURROUNDINGS | 0 | 1 | 1 | 1oo3 |
| REFLECTED SUNLIGHT / MODULATED SUNLIGHT | 1 | 0 | 1 | 1oo3 |
| USER DEFINED VOTING / WEIGHTED BASED ON INSTALLATION E.G. H2 FUEL INDOOR | 0 | 1 | 1 | 1oo3 |
| UNCLASSIFIED OR DEFAULT | 1 | 1 | 1 | 2oo3 |

FIG. 3

EP 4 685 765 A1

| 202 | 204 | 206 | 208 | 200 |
|---|---|---|---|---|
| NEAR BAND IR DATA (ENERGY) | LONG BAND IR DATA (HOT CO2 ENERGY SPECTRUM) | WIDE BAND IR DATA (HOT H2O ENERGY SPECTRUM) | ULTRAVIOLET UVC BAND DATA | VISIBLE AT LEAST ONE IMAGING ( FRAMES ) |

402 / 404A / 404B / 404C / 400

| CLASSIFIED FROM NIR ENERGY: NIGHT | ASSIGN WEIGHT WEIGHT =1 | ASSIGN WEIGHT WEIGHT =1 | ASSIGN WEIGHT WEIGHT =0 | CLASSIFIED FROM IMAGES: ARC WELDING |

406A / 406B / 406C

| | FLAME PROCESSING ALGORITHM COUNTER FC1 ++ | FLAME PROCESSING ALGORITHM COUNTER FC2 ++ | FLAME PROCESSING ALGORITHM COUNTER FC3 ++ | |

300

Ⓐ ————————————————————————————————— Ⓐ'

FIG. 4A

END OF 1 SEC

**408A**

| FLAME COUNT X<br>WEIGHT REPEAT<br>EVERY SAMPLE<br>MULTIPLY FC1 x 1<br><br>60 |
|---|

**408B**

| FLAME COUNT X<br>WEIGHT REPEAT<br>EVERY SAMPLE<br>MULTIPLY FC2 x 1<br><br>60 |
|---|

**408C**

| FLAME COUNT X<br>WEIGHT REPEAT<br>EVERY SAMPLE<br>MULTIPLY FC3 x 0<br><br>0 |
|---|

$\Sigma$ FC1 >= 120 CHANNEL 1 FLAME , FALSE
$\Sigma$ FC2 >= 120 CHANNEL 2 FLAME , FALSE
$\Sigma$ FC3 >= 120 CHANNEL 3 FLAME , FALSE

FINAL VERDICT IF 2oo3 (X OUT OF Y) = TRUE THEN FLAME ELSE
CONTINUE
(BASED ON CLASSIFICATION AND VOTING HIGHLIGHTED YELLOW)

FINAL VERDICT @ END OF 1 SEC = NO FLAME AS NONE OF THE
CONDITION IS MET

— 410

## FIG. 4A (CONTINUED)

FIG. 4B

EP 4 685 765 A1

(A) - - - - - - - - - - - - - - - - - - - - - - - - - - - - - - - - - - - - - (A')

420A  420B  420C

END OF 2 SEC

| FLAME COUNT X WEIGHT REPEAT EVERY SAMPLE 120 | FLAME COUNT X WEIGHT REPEAT EVERY SAMPLE 120 | FLAME COUNT X WEIGHT REPEAT EVERY SAMPLE 0 |

$\Sigma$ FC1 >= 120 CHANNEL 1 FLAME , TRUE
$\Sigma$ FC2 >= 120 CHANNEL 2 FLAME , TRUE
$\Sigma$ FC3 >= 120 CHANNEL 3 FLAME , FALSE

FINAL VERDICT IF 2oo3 (X OUT OF Y) = TRUE THEN FLAME ELSE CONTINUE
(BASED ON CLASSIFICATION AND VOTING HIGHLIGHTED YELLOW)

FINAL VERDICT @ END OF 2 SEC = FLAME AS BOTH CONDITION OF FLAME COUNTER >=120 AND 2oo3 VOTING IS MET

422

FIG. 4B (CONTINUED)

EP 4 685 765 A1

500

CLASSIFY, VIA AT LEAST ONE PROCESSOR, ONE OR MORE IMAGES CAPTURED BY AT LEAST ONE IMAGE CAPTURING UNIT —502

CLASSIFY, VIA THE AT LEAST ONE PROCESSOR, A FIRST SET OF SPECTRAL BAND DATA DETECTED BY AT LEAST ONE FLAME DETECTOR —504

ASSIGN, VIA THE AT LEAST ONE PROCESSOR, A WEIGHT TO EACH OF A SECOND SET OF SPECTRAL BAND DATA BASED AT LEAST ON THE CLASSIFICATION OF THE ONE OR MORE IMAGES AND THE CLASSIFICATION OF THE FIRST SET OF SPECTRAL BAND DATA. —506

RECEIVE, VIA THE AT LEAST ONE PROCESSOR, A COUNT FOR EACH OF THE SECOND SET OF SPECTRAL BAND DATA, FOR EACH COUNT, DETERMINE A WEIGHTED COUNT BASED ON THE WEIGHT ASSIGNED TO THE RESPECTIVE SECOND SET OF SPECTRAL BAND DATA, FOR EACH WEIGHTED COUNT, DETERMINE WHETHER THE WEIGHTED COUNT EXCEEDS A RESPECTIVE THRESHOLD VALUE —508

DETERMINE, VIA THE AT LEAST ONE PROCESSOR, A QUANTITY OF WEIGHTED COUNTS EXCEEDING ITS RESPECTIVE THRESHOLD VALUE, IN AN INSTANCE IN WHICH THE QUANTITY IS GREATER THAN OR EQUAL TO A QUANTITY THRESHOLD VALUE, DETERMINE THAT A FLAME EXISTS WITHIN THE FOV, IN AN INSTANCE IN WHICH THE QUANTITY IS LESS THAN THE QUANTITY THRESHOLD VALUE, DETERMINE THAT A FLAME DOES NOT EXIST WITHIN THE FOV —510

FIG. 5

## EUROPEAN SEARCH REPORT

**Application Number**

EP 25 18 6043

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/204725 A1 (HUSEYNOV JAVID [US] ET AL) 23 July 2015 (2015-07-23) * paragraphs [0001], [0002], [0016] - [0024], [0029] - [0025], [0041], [0043]; figures 1,2,3 * | 1-15 | INV. G08B17/12 G08B29/18 |
| A | CN 112 069 975 A (CHENGDU ZHIMA TECH CO LTD) 11 December 2020 (2020-12-11) * paragraphs [0002], [0005], [0010] - [0012], [0014] * | 1-15 | |
| A | ZHAO QIAN ET AL: "Flame Detection Using Generic Color Model and Improved Block-Based PCA in Active Infrared Camera", INTERNATIONAL JOURNAL OF PATTERN RECOGNITION AND ARTIFICIAL INTELLIGENCE (IJPRAI), [Online] vol. 32, no. 05, 3 May 2018 (2018-05-03), page 1850014, XP055888446, SI ISSN: 0218-0014, DOI: 10.1142/S0218001418500143 Retrieved from the Internet: URL:http://dx.doi.org/10.1142/S02180014185 00143> [retrieved on 2025-11-20] Sections 1 and 2; * abstract * | 1-15 | |

**TECHNICAL FIELDS SEARCHED (IPC)**

G08B
G01J

The present search report has been drawn up for all claims

| Place of search | Date of completion of the search | Examiner |
|---|---|---|
| Munich | 24 November 2025 | Russo, Michela |

## ANNEX TO THE EUROPEAN SEARCH REPORT
## ON EUROPEAN PATENT APPLICATION NO.

EP 25 18 6043

24-11-2025

| Patent document cited in search report | Publication date | Patent family member(s) | Publication date |
|---|---|---|---|
| US 2015204725 A1 | 23-07-2015 | CN 105683729 A | 15-06-2016 |
| | | EP 3097394 A1 | 30-11-2016 |
| | | US 2015204725 A1 | 23-07-2015 |
| | | US 2017363475 A1 | 21-12-2017 |
| | | WO 2015112207 A1 | 30-07-2015 |
| CN 112069975 A | 11-12-2020 | NONE | |